# EUROPEAN PATENT SPECIFICATION

(11) **EP 4 372 888 B1**
(45) Date of publication and mention of the grant of the patent: **07.10.2026**
(21) Application number: 23848697.1
(22) Date of filing: 25.07.2023
(51) Int. Cl.: H01M 50/291, H01M 50/207, H01M 50/593, H01M 50/264, H01M 50/242, H01M 50/244, H01M 50/262

(54) **BATTERY PACK**
BATTERIEPACK
BLOC-BATTERIE

(30) Priority: 04.08.2022 KR 20220097556; 17.03.2023 KR 20230035431
(43) Date of publication of application: 22.05.2024
(73) Proprietor: LG ENERGY SOLUTION, LTD., Seoul 07335 (KR)
(72) Inventor: HUR, Nam Hoon, Daejeon 34122 (KR); LEE, Hyoung Suk, Daejeon 34122 (KR); SHIN, Ju Hwan, Daejeon 34122 (KR); YANG, Chang Hyeon, Daejeon 34122 (KR)
(74) Representative: Plasseraud IP
(86) International application number: PCT/KR2023/010730
(87) International publication number: WO 2024/029814

(56) References cited:
- DE-A1- 102012 015 818
- KR-A- 20190 078 386
- KR-A- 20210 007 244
- KR-A- 20210 061 945
- KR-A- 20220 008 619
- KR-B1- 102 357 486
- KR-B1- 102 357 486
- US-A1- 2022 153 112

## Description

### [Technical Field]

The present invention relates to a battery pack, and more particularly to a battery pack having a structure that allows a cell stack or battery module to be installed closely against a barrier without interference from welding beads. In particular, the present invention provides a battery pack suitable for a cell-to-pack (CTP) structure, where the cell stack is installed directly into the battery pack.

This application claims the benefit of priority to Korean Patent Applications No. 10-2022-0097556, filed on August 4, 2022, and Korean Patent Applications No. 10-2023-0035431, filed on March 17, 2023.

### [Background Technology of the Invention]

Conventionally, battery packs have been manufactured with a structure that houses a plurality of battery modules with a plurality of cell stacks housed in a module housing.

However, these conventional battery packs require two coats of thermal resin between the cell stack and the module housing, and between the module housing and the pack case, which increases manufacturing costs while decreasing cooling performance. In addition, additional parts were required for the module components and pack case mounting to form the battery module, which increased component costs. In addition, when welding the barrier compartmentalizing the battery modules to the pack case, welding beads on the barrier prevented the module housing from being installed tightly against the barrier, resulting in poor space utilization in the pack case and reduced energy density of the battery pack.

Even in a simplified structure where the module housing is removed and the cell stack is mounted directly to the pack case to implement a cell-to-pack battery pack, the problem of interference with the cell stack by welding beads on the barrier remains.

In addition, when installing cell stacks between the barrier without the module housing, it is very productive to use a loading jig that grabs a plurality of cell stacks at once and places them inside the barrier, but it is difficult to install a plurality of cell stacks in a pack case at once due to interference between the loading jig and the barrier, which are dug deep into the cell stack to stably transport a group of heavy cell stacks.

Therefore, it is necessary to develop a technology that can simplify the structure of the battery pack, improve space utilization and energy density by excluding the interference of welding beads, and facilitate the installation of the cell stack into the pack case.

DE 10 2012 015818 Al discloses a cross beam wherein the lower cross beam includes a first concavo-convex structure with repeated concave parts and protruding parts extending in a coupling direction of the upper cross beam, and wherein the upper cross beam includes a second concavo-convex structure corresponding to the first concavo-convex structure.

### [Prior Art Documents]

(Patent Document 001) Korean Patent Publication No. 10-2022-0102484 (published on July 20, 2022)

### [Description of the Invention]

### [Technical Problem]

It is an object of the present invention to provide a pack case in which a welding operation of coupling a cross beam to a base plate can be easily performed, a uniform surface pressure can be applied to a plurality of cell stacks, and a loading jig handling the plurality of cell stacks as one body can reliably perform the operation without interference from the cross beam.

In addition, another object of the present invention is to provide a pack case that can solve the problem of interference of the cell stack by the welding bead that inevitably occurs when welding the cross beam to the base plate.

However, the technical problems that the present invention seeks to address are not limited to those described above, and other problems not mentioned will be apparent to those of ordinary skill in the art from the following description of the invention.

### [Technical Solution]

The present invention relates to a pack case, which in one example includes a base plate; a side plate coupled along a perimeter of the base plate to define an accommodation space therein; a lower cross beam coupled to the base plate to transversely divide the accommodation space; and an upper cross beam coupled to the lower cross beam.

The upper cross beam is coupled to an upper surface of the lower cross beam to form a single cross beam.

In an exemplary embodiment, it includes a center beam coupled to the base plate so as to longitudinally divide the accommodation space.

According to the invention, the lower cross beam is provided with a first concavo-convex structure with repeated concave parts and protruding parts extending in a coupling direction of the upper cross beam, and the upper cross beam may be provided with a second concavo-convex structure corresponding to the first concavo-convex structure.

The lower cross beam may be coupled to the base plate by welding, and the upper cross beam may be coupled to the lower cross beam by a bolt.

In an exemplary embodiment, the upper cross beam may be made of a lighter material than a material of the lower cross beam.

According tot he invention, the lower cross beam is provided with at least one concave welding groove at a boundary with the base plate.

For example, the at least one concave welding groove may include concave welding grooves on opposite sides of the lower cross beam.

Each of the contact welding grooves may be distributed so that at least some part of thereof does not overlap along a corresponding concave welding groove facing it.

In addition, the lower cross beam is welded to the base plate via a welding bead in the welding groove, and the welding bead in the welding groove may not protrude outside the lower cross beam.

Meanwhile, the present invention may provide a battery pack including a pack case having the above configuration, and a plurality of cell stacks located in the transversely divided accommodation space of the pack case.

An insulating sheet or compression pad may be interposed between a contact surface of one cell stack of the plurality of cell stacks and the lower cross beam and the upper cross beam adjacent the contact surface of the one cell stack.

Such battery pack may be manufacturing by: a first step of preparing a pack case comprising a base plate, a side plate coupled along a perimeter of the base plate to form an accommodation space therein, and one or more lower cross beams coupled to the base plate to divide the accommodation space into two or more spaces; a second step of placing a plurality of cell stacks in one space of the two or more spaces; a third step of coupling an upper cross beam to one lower cross beam of the one or more lower cross beams after the plurality of cell stacks is placed in the one space of the two or more spaces; and repeating the second step and the third step for the remaining of the two or more spaces.

Here, in the manufacturing method of a battery pack according to the present invention, each lower cross beam of the one or more cross beams has a concavo-convex structure with repeated concave parts and protruding parts extending in a coupling direction of the upper cross beam, and optionally the second step uses a loading jig having a gripper for gripping the plurality of cell stacks collectively, and the gripper is configured to enter a concave part in the first concavo-convex structure and place the gripped plurality of cell stacks onto the base plate.

In addition, in the second step, after the plurality of cell stacks are placed on the base plate, the gripper moves across an upper part of the lower cross beam upon release of the gripper.

### [Advantageous Effects]

As described above, the pack case of the present invention has a two-layer structure with a lower cross beam in which a single cross beam is coupled to a base plate and an upper cross beam coupling upwardly to the lower cross beam. By having the cross beams in a two-layer coupling structure, the accessibility of the welding tool tip is improved to facilitate welding of the lower cross beam to the base plate, and the workability of the loading jig is improved by allowing the plurality of cell stacks to be settled in the pack case before the upper cross beam is assembled.

In addition, the two-layer structure of the cross beam can contribute to the light weighting of the battery pack by allowing the upper cross beam, which does not involve welding to the base plate, to be made of a different lightweight material, e.g. engineering plastics.

Furthermore, in accordance with the present invention, the lower cross beam is provided with a first concavo-convex structure, so that the gripper of the loading jig can firmly grip the cell stack and enter without causing interference to the lower cross beam, and the cell stack can be stably settled on the base plate without impact.

However, the technical effects of the present invention are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 is a perspective view of a pack case according to an exemplary embodiment of the present invention.
FIG. 2 is a perspective view illustrating an upper cross beam separated from the pack case in FIG. 1.
FIG. 3 is a drawing illustrating a coupling structure of the lower and upper cross beams.
FIG. 4 is a cross-sectional view sectioned along line "A-A" in FIG. 3.
FIG. 5 is a perspective view illustrating a welding structure of the lower cross beam to the base plate.
FIG. 6 is a plan view illustrating a welding point of the lower cross beam to the base plate.
FIG. 7 is a perspective view of a battery pack according to an exemplary embodiment of the present invention.
FIG. 8 is a cross-sectional view sectioned along line "B-B" in FIG. 7.
FIG. 9 is a cross-sectional view illustrating an exemplary embodiment of a gripper of a loading jig gripping a plurality of cell stacks entering a lower cross beam.
FIG. 10 is a cross-sectional view illustrating a state in which the loading jig of FIG. 9 entered the lower cross beam.
FIG. 11 is a cross-sectional view illustrating the detaching process of a loading jig after settling a plurality of cell stacks.
FIG. 12 is a cross-sectional view illustrating a state in which the upper cross beam is engaged after the loading jig is detached.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a pack case, which in one example includes a base plate, a side plate coupled along the perimeter of the base plate to form an accommodation space therein; a lower cross beam coupled to the base plate to transversely compartmentalize an accommodation space inside the base plate; and an upper cross beam coupled to the lower cross beam.

And, the upper cross beam is upwardly coupled to the lower cross beam to form a single cross beam.

As such, the pack case of the present invention has a two-layer structure, with a lower cross beam in which a single cross beam is coupled to the base plate and an upper cross beam coupling upwardly to the lower cross beam. By having the cross beams in a two-layer coupling structure, the accessibility of the welding tool tip is improved to facilitate welding of the lower cross beam to the base plate, and the workability of the loading jig is improved by allowing the plurality of cell stacks to be settled in the pack case before the upper cross beam is assembled.

In addition, the two-layer structure of the cross beam can contribute to the light weighting of the battery pack by allowing the upper cross beam, which does not involve welding to the base plate, to be made of a different lightweight material, e.g. engineering plastics.

### [Mode for Carrying out the Invention]

Hereinafter, with reference to the accompanying drawings, specific embodiments of a pack case 100 and a battery pack 200 including the pack case 100 according to the present invention will be described in detail. For reference, relative positioning designations used in the following description such as front, back, up, down, left, and right are intended to aid in the understanding of the invention, and refer to the orientation shown in the drawings unless otherwise defined.

### [First Embodiment]

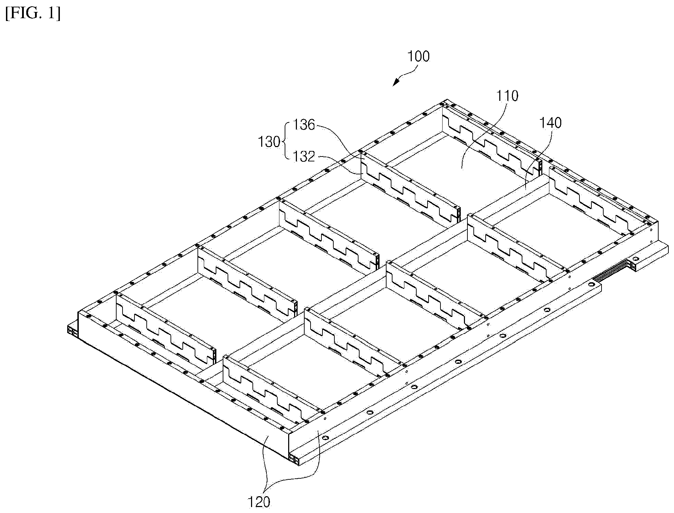

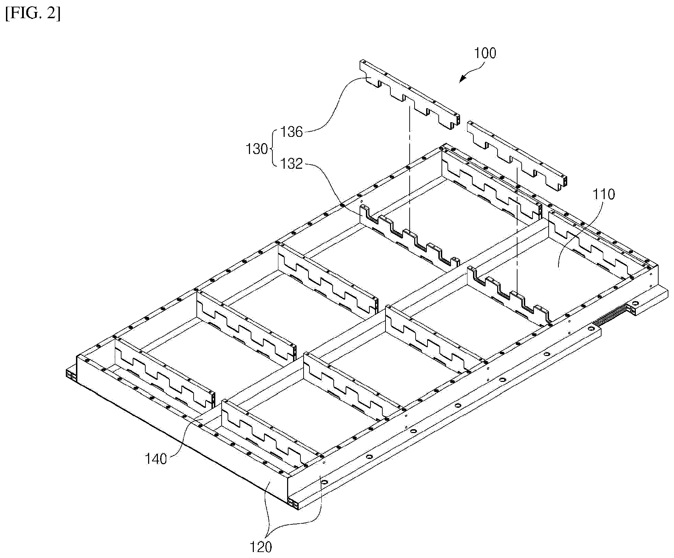

FIG. 1 is a perspective view of a pack case 100 according to an exemplary embodiment of the present invention, and FIG. 2 is a perspective view illustrating an upper cross beam 136 separated from the pack case 100 of FIG. 1. Referring to FIGS. 1 and 2, the overall configuration of the pack case 100 according to an exemplary embodiment of the present invention will be described.

The present invention relates to a pack case 100 for accommodating a plurality of cell stacks 210 evenly divided. A cell stack 210 is a single finished battery cell capable of being charged and discharged as a secondary battery, and is used herein in a comprehensive meaning regardless of external distinction such as a pouch-type battery, a prismatic battery, or the like. In addition, while it is not precluded that the plurality of cell stacks 210 may comprise a battery module housed in a single housing and mounted in the pack case 100, the plurality of cell stacks 210 are illustrated in the drawings as a simple aggregation of pouch-type cells, particularly considering the fact that the pack case 100 of the present invention is suitable for a cell-to-pack structure that does not utilize various module components such as a module housing, and the like.

The illustrated pack case 100 includes a base plate 110 and a side plate 120 coupled along the perimeter of the base plate 110 to form an accommodation space therein. And, as a barrier member that divides the accommodation space inside the base plate 110, it has a cross beam 130 that is coupled to the base plate 110 in a transverse direction with reference to the drawings. Here, the pack case 100 of the present invention may include a center beam 140 coupled to the base plate 110 to longitudinally compartmentalize the accommodation space inside the base plate 110, in which case the cross beam 130 transversely compartmentalize each accommodation space divided by the center beam 140.

Referring to FIG. 2, the cross beam 130 includes two cross beams, a lower cross beam 132 directly coupled to the base plate 110 to transversely compartmentalize the accommodation space within the base plate 110, and an upper cross beam 136 coupled to the lower cross beam 132. The cross beam 130 has a two-layer structure in which the upper cross beam 136 is upwardly coupled with respect to the lower cross beam 132, i.e., the upper cross beam is mutually coupled in an aligned state so that the upper cross beam 136 is laid over the top of the lower cross beam 132, thereby forming a single cross beam 130.

By thus having a single cross beam 130 divided into lower and upper cross beams 132, 136 to form a two-layer structure, the pack case 100 of the present invention has many advantages. For example, since only the lower cross beam 132 needs to be coupled to the base plate 110, the reduced height of the cross beam 130 facilitates welding operations on the lower cross beam 132 by improving the accessibility of the welding tool tip. Furthermore, the plurality of cell stacks 210 can be loaded into the pack case 100 before the upper cross beam 136 is assembled, eliminating the problem of interference with the cross beam 130, thereby improving the workability of the loading jig 300 which handles the plurality of cell stacks 210 collectively.

In addition, by configuring the cross beams 130 in a two-layer structure, an upper cross beam 136 that does not involve welding to the base plate 110 can be made of a different lightweight material. For example, the lower cross beam 132 can be made of a metal material such as stainless steel that can be welded, while the upper cross beam 136 can be made of a lighter weight engineering plastic or the like, thereby contributing to light weighting of the battery pack 200.

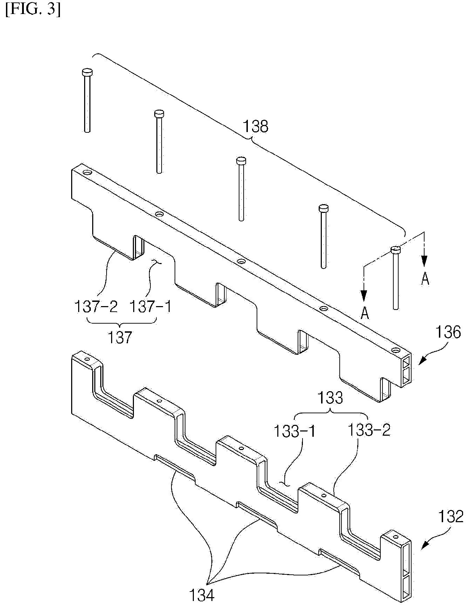

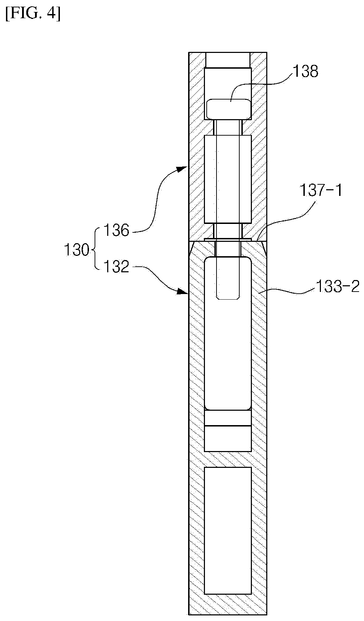

FIG. 3 is a drawing illustrating an exemplary embodiment of a coupling structure of the lower and upper cross beams 132, 136, and FIG. 4 is a cross-sectional view sectioned along the line "A-A" in FIG. 3. According to the exemplary embodiment shown, the lower cross beam 132 has a first concavo-convex structure 133 with repeated concave part 133-1 and protruding part 133-2 in the upward coupling direction of the upper cross beam 136, and the upper cross beam 136 correspondingly has a second concavo-convex structure 137 in a form complementary to the first concavo-convex structure 133.

Here, when it is said that the first concavo-convex structure 133 and the second concavo-convex structure 137 have a complementary shape, it is meant that the concave part 133-1 of the first concavo-convex structure 133 and the protruding part 137-2 of the second concavo-convex structure 137, and the protruding part 133-2 of the first concavo-convex structure 133 and the concave part 137-1 of the second concavo-convex structure 137 form a kind of clamping structure facing each other. By the complementary concavo-convex structures 133, 137, the coupling position of the upper cross beam 136 with respect to the lower cross beam 132 is determined as one, thereby ensuring accurate alignment of the lower and upper cross beams 132, 136, and thereby facilitating the operation of fastening the lower and upper cross beams 132, 136 with bolts 138 in a temporarily assembled state. Furthermore, as will be described below, the first concavo-convex structure 133 of the lower cross beam 132 is also advantageously utilized to avoid interference with the loading jig 300.

As mentioned above, the lower cross beam 132 can be coupled by welding to the base plate 110, and the upper cross beam 136 can be coupled by bolts 138 to the lower cross beam 132, and by such a separated two-layer coupling structure, it becomes possible to make the upper cross beam 136 of a different lightweight material. Referring to FIG. 3, it is advantageous to have a short access path from the upper cross beam 136 to the lower cross beam 132 when considering the effective threaded engagement depth of the bolts 138, so that the engagement of the bolts 138 takes place in the region where the concave part 137-1 of the second concavo-convex structure 137 engages the convex part of the first concavo-convex structure 133.

And, referring to FIG. 4, the lower and upper cross beams 132, 136 are essentially hollow and have a ribbed structure connecting the two sidewalls for rigidity. The hollow structure of the lower and upper cross beams 132, 136 allows for light weighting and is also advantageous for delaying heat transfer due to thermal runaway by inhibiting heat generated by any of the cell stack 210 within the pack case 100 from transferring to the other cell stacks 210 between the cross beams 130 in the form of conduction.

### [Second Embodiment]

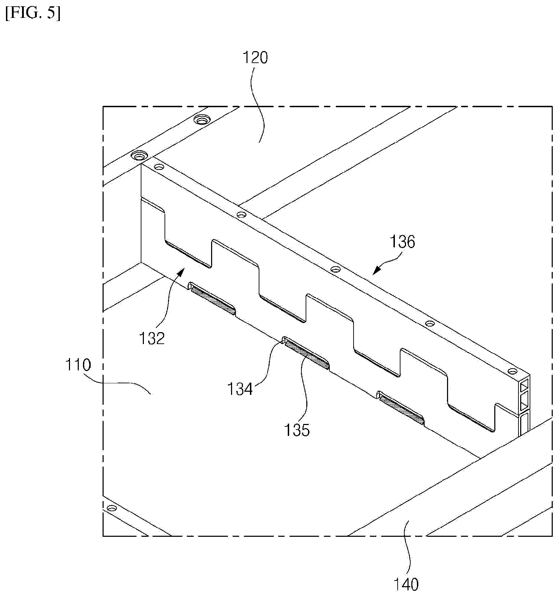

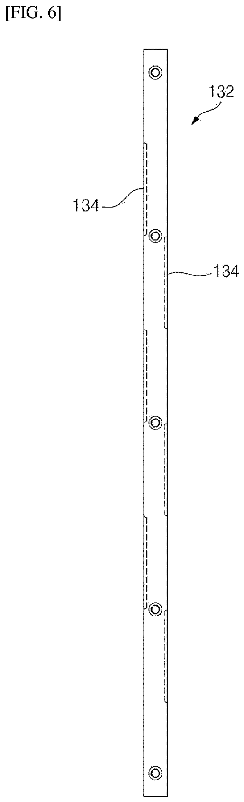

FIG. 5 is a perspective view illustrating a welding structure of the lower cross beam 132 to the base plate 110, and FIG. 6 is a plan view illustrating a welding point of the lower cross beam 132 to the base plate 110.

The cross beam 130 is an important member that reinforces rigidity in the transverse direction of the pack case 100, and is coupled to the base plate 110 by welding, bolting, or the like. Welding is often used considering the strength of the engagement, productivity, light weighting, and the like, but in this case, welding beads 135 that form on the welded surfaces of the cross beam 130 and the base plate 110 cause problems with the safety and capacity of the battery pack 200.

That is, a plurality of cell stacks 210 are mounted inside the cross beam 130, especially when there is no module housing or is a simplified cell-to-pack structure, the cell stacks 210 are interfered by the welding bead 135, and in an environment where vibration, shock, etc. are applied for an extended period of time, the cell stacks 210 that are interfered by the welding bead 135 are susceptible to damage and breakage, which can cause serious safety issues such as fire. Furthermore, a design that avoids interference with the welding bead 135 creates a dead space, which reduces the energy density of the battery pack 200.

The welding structure of the lower cross beam 132 of FIGS. 5 and 6 may solve the problem of these welding beads 135. Referring to the drawings, the lower cross beam 132 has at least one concave welding groove 134 at a boundary with the base plate 110. The lower cross beam 132 is welded against the base plate 110 via the welding groove 134, thereby forming a welding bead 135 in the accommodation space within the welding groove 134, wherein the welding bead 135 formed within the welding groove 134 does not protrude outside of the lower cross beam 132. Thereby, interference of the cell stack 210 by the welding bead 135 and/or the occurrence of dead space by designing around can be prevented.

The size of the welding groove 134 may be designed in consideration of the size of the welding tool tip and the size of the welding bead 135 depending on the welding method. For example, wire laser welding requires a small tip size and a welding bead size of 2 to 3mm, so the size of the welding groove 134 can be made to a corresponding height and depth of a few millimeters.

In an exemplary embodiment of the present invention, the welding groove 134 may be provided on both sides of the lower cross beam 132. In this case, as shown in FIG. 6, each of the welding grooves 134 provided on both sides of the lower cross beam 132 may be at least partially non-overlapping along the direction in which they face each other, that is, may be distributed to crisscross each other. By evenly distributing the welding grooves 134 on both sides of the lower cross beam 132, a stable welding strength can be achieved while reducing the risk of deformation due to welding heat.

### [Third Embodiment]

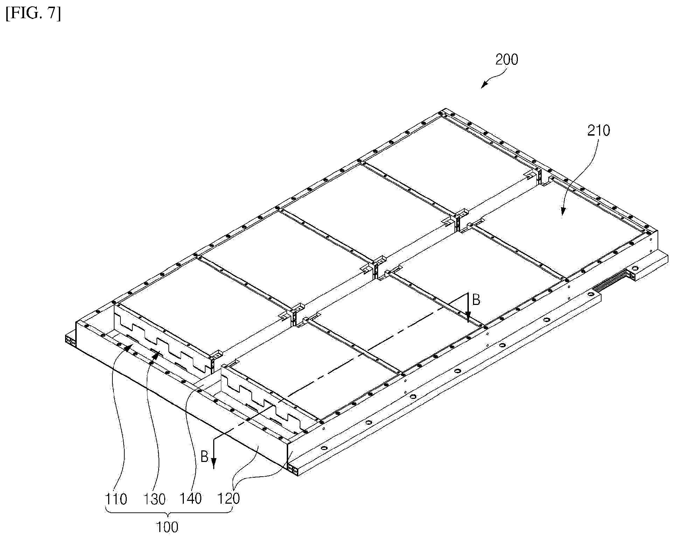

FIG. 7 is a perspective view of a battery pack 200 according to an exemplary embodiment of the present invention. With respect to the pack case 100 of the present invention described in the first and second embodiments, the battery pack 200 is completed by mounting each of the plurality of cell stacks 210 in a plurality of accommodation spaces divided by a cross beam 130, or a cross beam 130 and a center beam 140 (the embodiment shown in the drawing). Note that the illustrated embodiment is a cell-to-pack battery pack 200 with a plurality of cell stacks 210 gathered between a busbar frame assembly (BFA) for electrical connections without a separate module housing, and the leads closing the top surface are omitted for illustration of the internal structure.

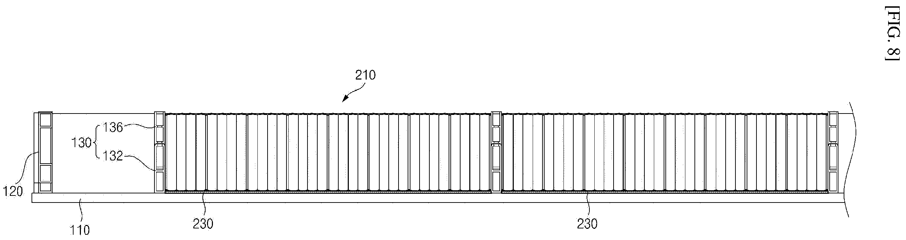

FIG. 8 is a cross-sectional view sectioned along line "B-B" of FIG. 7, showing an insulating sheet or compression pad 220 interposed between the lower and upper cross beams 132, 136 and the contact surfaces of the cell stack 210. For convenience, a thinner member is referred to as the insulation sheet, and a thicker member that is relatively more elastic is referred to as the compression pad, and both serve to protect the cell stack 210 against the cross beam 130 as a protective member for electrical insulation and for reinforcing the impact resistance and abrasion resistance of the cell stack 210.

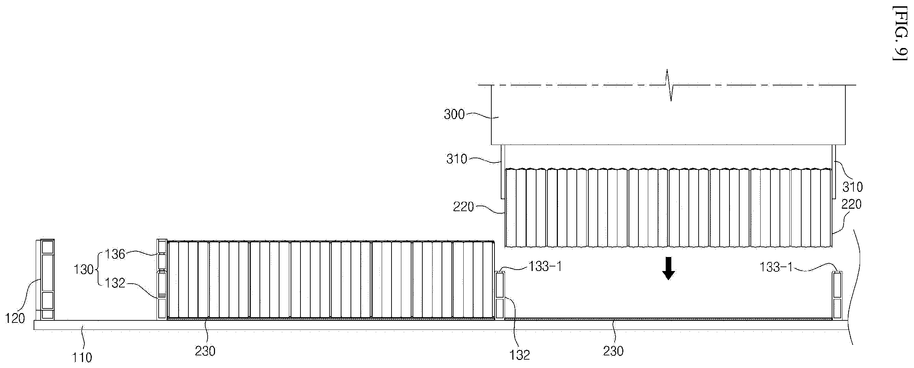

Meanwhile, FIGS. 9 through 12 illustrate a series of processes for manufacturing a battery pack 200 using the pack case 100 of the present invention described above. The method of manufacturing the battery pack 200 begins with a first step of preparing the pack case 100 of the present invention, namely the pack case 100 having a base plate 110, a side plate 120 coupled along the perimeter of the base plate 110 to form an accommodation space therein, and a lower cross beam 132 coupled to the base plate 110 to compartmentalize the accommodation space inside the base plate 110.

In particular, in the first step, only the lower cross beam 132 of the entire cross beam 130 is prepared in the pack case 100, and in this state, mounting of the cell stack 210 takes place. That is, in the second step, a plurality of cell stacks 210 are settled into the accommodation space compartmentalized by the lower cross beam 132, and a loading jig 300 may be used to handle a plurality of cell stacks 210 at once, particularly for productivity.

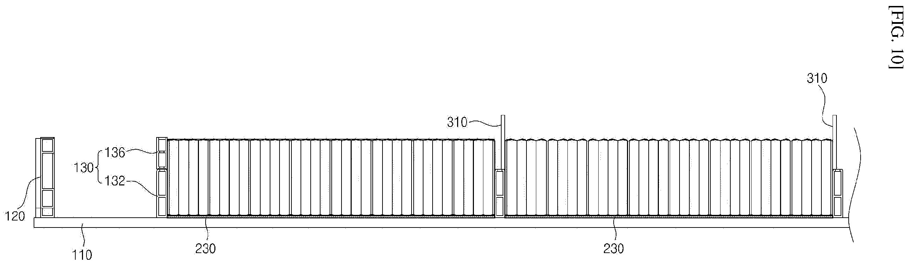

FIG. 9 is a perspective view illustrating an exemplary embodiment in which the gripper 310 of the loading jig 300 gripping the plurality of cell stacks 210 enters the lower cross beam 132, and FIG. 10 is a cross-sectional view illustrating the loading jig 300 of FIG. 9 entering the lower cross beam 132. For smooth operation of the loading jig 300, it is preferred that the pack case 100 prepared in the first step has a first concavo-convex structure 133 in which the lower cross beam 132 has repeated concave part 133-1 and protruding part 133-2 in the coupling direction of the upper cross beam 136.

As shown in FIGS. 9 and 10, the loading jig 300 is provided with a gripper 310 for gripping the plurality of cell stacks 210 collectively. The gripper 310 of the loading jig 300 is provided in pairs to grip two sides of the cell stack 210 parallel to the lower cross beam 132, and may further include a gripper 310 to grip other sides of the cell stack 210. In particular, a gripper 310 for gripping the two sides of the cell stack 210 facing the lower cross beam 132 may include a plurality of feet corresponding to positions (or positions and numbers) of concave part 133-1 of the first concavo-convex structure 133 formed in the lower cross beam 132. Accordingly, the gripper 310 of the loading jig 300 enters into the concave part 133-1 of the first concavo-convex structure 133 and grips the plurality of cell stacks 210 to settle on the base plate 110.

Roughly, the depth of the concave part 133-1 of the first concavo-convex structure 133 is at least half the overall height of the cell stack 210. Thus, the gripper 310 of the loading jig 300 can have a gripping area of at least half of the overall height of the cell stack 210. In other words, by having the lower cross beam 132 with the first concavo-convex structure 133, the gripper 310 of the loading jig 300 is able to firmly grip and enter the cell stack 210 without causing interference with the lower cross beam 132, and the cell stack 210 can be stably settled on the base plate 110 without impact.

For reference, a reference numeral 230 is a thermal resin, which serves to improve the heat dissipation performance of the battery pack 200 by facilitating conduction heat transfer between the base plate 110 and the cell stack 210. Of course, prior to mounting the cell stack 210 inside the pack case 100, the thermal resin 230 is evenly applied to the base plate 110 at an appropriate thickness.

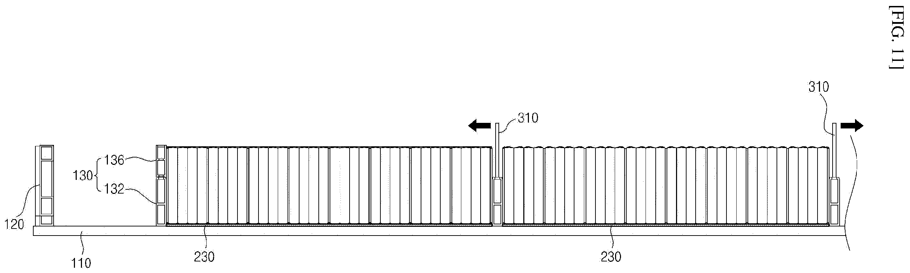

FIG. 11 is a cross-sectional view illustrating the detaching process of the loading jig 300 after settling the plurality of cell stacks 210. Due to the thinness of the gripper 310 compared to the thickness of the lower cross beam 132, once the gripper 310 of the loading jig 300 has gripped the plurality of cell stacks 210 collectively and settled them on the base plate 110, the gripper 310 can retract to release the grip and continue to detach to the upper part of the lower cross beam 132.

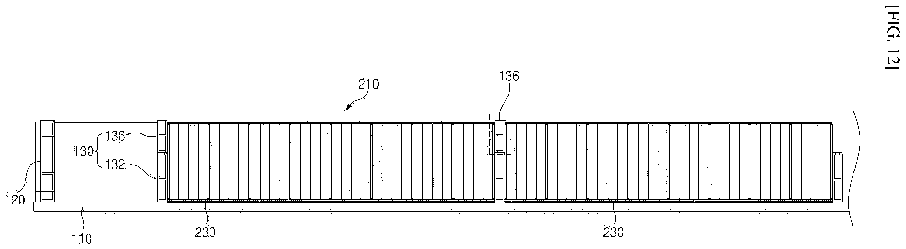

Once the plurality of cell stacks 210 are collectively mounted in a single accommodation space through this series of steps, the third step of coupling the upper cross beam 136 with respect to the lower cross beam 132 on which the plurality of cell stacks 210 is mounted is then performed, as shown in FIG. 12. By coupling the upper cross beam 136 with respect to the lower cross beam 132, sufficient surface pressure can be created over the entire height of the cell stack 210. By the surface pressure applied to the cell stack 210, the swelling phenomenon that occurs as the cell stack 210 repeating discharges the charge can be effectively suppressed. In addition, the gripping surfaces of the plurality of cell stacks 210 gripped by the loading jig 300 may have insulating sheets or compression pads 220 attached thereto, which may also help to suppress the swelling phenomenon.

And, the second and third steps as described above, namely, the second step of settling the plurality of cell stacks 210 in the accommodation spaces compartmentalized by the lower cross beam 132, and a fourth step of mounting the plurality of cell stacks 210 in all of the accommodation spaces is performed by repeating the third step of coupling the upper cross beam 136 with respect to the lower cross beam 132 in which the plurality of cell stacks 210 are settled, thereby completing the battery pack 200 with all of the cell stacks 210 mounted in the pack case 100 of the present invention.

The present invention has been described in more detail above with reference to the drawings and embodiments. However, it is to be understood that the configurations shown in the drawings or embodiments described herein are only one embodiment of the invention.

### [Reference numerals]

100: PACK CASE
110: BASE PLATE
120: SIDE PLATE
130: CROSS BEAM
132: LOWER CROSS BEAM
133: FIRST CONCAVO-CONVEX STRUCTURE
133-1: CONCAVE PART
133-2: PROTRUDING PART
134: WELDING GROOVE
135: WELDING BEAD
136: UPPER CROSS BEAM
137: SECOND CONCAVO-CONVEX STRUCTURE
137-1: CONCAVE PART
137-2: PROTRUDING PART
138: BOLT
140: CENTER BEAM
200: BATTERY PACK
210: CELL STACK
220: INSULATION SHEET OR COMPRESSION PAD
230: THERMAL RESIN
300: LOADING JIG
310: GRIPPER

## Claims

1. A pack case (100) for batteries, the pack case (100) comprising:
a base plate (110);
a side plate (120) coupled along a perimeter of the base plate (110) to define an accommodation space therein;
a lower cross beam (132) coupled to the base plate (110) to transversely divide the accommodation space; and
an upper cross beam (136) coupled to the lower cross beam (132),
wherein the lower cross beam (132) includes a first concavo-convex structure (133) with repeated concave parts and protruding parts extending in a coupling direction of the upper cross beam (136), and
wherein the upper cross beam (136) includes a second concavo-convex structure corresponding to the first concavo-convex structure (133),
wherein the lower cross beam includes at least one concave welding groove (134) at a boundary with the base plate (110).

2. The pack case (100) of claim 1, wherein the upper cross beam (136) is coupled to an upper surface of the lower cross beam (132) to form a single cross beam.

3. The pack case (100) of claim 1, further comprising a center beam (140) coupled to the base plate (110) so as to longitudinally divide the accommodation space.

4. The pack case (100) of claim 1, wherein the lower cross beam (132) is coupled to the base plate (110) by welding, and
wherein the upper cross beam (136) is coupled to the lower cross beam (132) by a bolt (138).

5. The pack case (100) of claim 4, wherein the upper cross beam (136) is made of a lighter material than a material of the lower cross beam (132).

6. The pack case (100) of any of the preceding claims, wherein the at least one concave welding groove (134) includes concave welding grooves on opposite sides of the lower cross beam (132).

7. The pack case (100) of claim 6, wherein each of the concave welding grooves is distributed so that at least some part thereof does not overlap a corresponding concave welding groove facing it.

8. The pack case (100) of any of the preceding claims, wherein the lower cross beam (132) is welded to the base plate (110) via a welding bead (135) in the welding groove, and
wherein the welding bead (135) in the welding groove does not protrude outside the lower cross beam (132).

9. A battery pack (200) comprising:
a pack case (100) according to any one of claims 1 to 8; and
a plurality of cell stacks (210) located in the transversely divided accommodation space of the pack case (100).

10. The battery pack (200) of claim 9, wherein an insulating sheet or compression pad (220) is interposed between a contact surface of one cell stack (210) of the plurality of cell stacks and the lower cross beam (132) and the upper cross beam (136) adjacent the contact surface of the one cell stack (210).

11. A manufacturing method of a battery pack (200) for batteries, the method comprising:
a first step of preparing a pack case (100) comprising a base plate (110), a side plate (120) coupled along a perimeter of the base plate (110) to form an accommodation space therein, and one or more lower cross beams (132) coupled to the base plate (110) to divide the accommodation space into two or more spaces; wherein each lower cross beam (132) of the one or more cross beams has a first concavo-convex structure (133) with repeated concave parts and protruding parts extending in a coupling direction of the upper cross beam (136),
a second step of placing a plurality of cell stacks (210) in one space of the two or more spaces;
a third step of coupling an upper cross beam (136) to one lower cross beam (132) of the one or more lower cross beams (132) after the plurality of cell stacks (210) is placed in the one space of the two or more spaces;
wherein the upper cross beam (136) includes a second concavo-convex structure corresponding to the first concavo-convex structure (133),
wherein the lower cross beam includes at least one concave welding groove (134) at a boundary with the base plate (110), and
repeating the second step and the third step for all of the remaining two or more spaces.

12. The manufacturing method of a battery pack (200) of claim 11,
wherein the second step uses a loading jig (300) having a gripper (310) for gripping the plurality of cell stacks (210) collectively, and the gripper (310) is configured to enter a concave part in the first concavo-convex structure (133) and place the gripped plurality of cell stacks (210) onto the base plate (110).

13. The manufacturing method of a battery pack (200) of claim 12, wherein, in the second step, after the plurality of cell stacks (210) is placed on the base plate (110), the gripper (310) moves across an upper part of the lower cross beam (132) upon release of the gripper (310).

## Patentansprüche

1. Packgehäuse (100) für Batterien, wobei das Packgehäuse (100) Folgendes umfasst:
eine Grundplatte (110);
eine Seitenplatte (120), die entlang eines Umfangs der Grundplatte (110) gekoppelt ist, um einen Aufnahmeraum darin zu definieren;
einen unteren Querträger (132), der mit der Grundplatte (110) gekoppelt ist, um den Aufnahmeraum quer zu unterteilen; und
einen oberen Querträger (136), der mit dem unteren Querträger (132) gekoppelt ist,
wobei der untere Querträger (132) eine erste konkav-konvexe Struktur (133) mit sich wiederholenden konkaven Teilen und vorstehenden Teilen aufweist, die sich in einer Kopplungsrichtung des oberen Querträgers (136) erstrecken, und
wobei der obere Querträger (136) eine zweite konkav-konvexe Struktur aufweist, die der ersten konkav-konvexen Struktur (133) entspricht,
wobei der untere Querträger mindestens eine konkave Schweißnut (134) an einer Grenze mit der Grundplatte (110) aufweist.

2. Packgehäuse (100) nach Anspruch 1, wobei der obere Querträger (136) mit einer oberen Fläche des unteren Querträgers (132) gekoppelt ist, um einen einzelnen Querträger zu bilden.

3. Packgehäuse (100) nach Anspruch 1, ferner umfassend einen Mittelträger (140), der mit der Grundplatte (110) gekoppelt ist, um den Aufnahmeraum längs zu unterteilen.

4. Packgehäuse (100) nach Anspruch 1, wobei der untere Querträger (132) durch Schweißen mit der Grundplatte (110) gekoppelt ist, und
wobei der obere Querträger (136) durch einen Bolzen (138) mit dem unteren Querträger (132) gekoppelt ist.

5. Packgehäuse (100) nach Anspruch 4, wobei der obere Querträger (136) aus einem leichteren Material als ein Material des unteren Querträgers (132) hergestellt ist.

6. Packgehäuse (100) nach einem der vorhergehenden Ansprüche, wobei die mindestens eine konkave Schweißnut (134) konkave Schweißnuten auf gegenüberliegenden Seiten des unteren Querträgers (132) aufweist.

7. Packgehäuse (100) nach Anspruch 6, wobei jede der konkaven Schweißnuten so verteilt ist, dass mindestens ein Teil davon eine entsprechende, ihr gegenüberliegende konkave Schweißnut nicht überlappt.

8. Packgehäuse (100) nach einem der vorhergehenden Ansprüche, wobei der untere Querträger (132) über eine Schweißraupe (135) in der Schweißnut an die Grundplatte (110) geschweißt ist, und
wobei die Schweißraupe (135) in der Schweißnut nicht außerhalb des unteren Querträgers (132) vorsteht.

9. Batteriepack (200), umfassend:
ein Packgehäuse (100) nach einem der Ansprüche 1 bis 8; und
eine Vielzahl von Zellstapeln (210), die sich in dem quer unterteilten Aufnahmeraum des Packgehäuses (100) befinden.

10. Batteriepack (200) nach Anspruch 9, wobei eine Isolierfolie oder ein Kompressionspad (220) zwischen einer Kontaktfläche eines Zellstapels (210) der Vielzahl von Zellstapeln und dem unteren Querträger (132) und dem oberen Querträger (136) benachbart der Kontaktfläche des einen Zellstapels (210) angeordnet ist.

11. Herstellungsverfahren für einen Batteriepack (200) für Batterien, wobei das Verfahren Folgendes umfasst:
einen ersten Schritt des Bereitstellens eines Packgehäuses (100), das eine Grundplatte (110), eine Seitenplatte (120), die entlang eines Umfangs der Grundplatte (110) gekoppelt ist, um einen Aufnahmeraum darin zu bilden, und einen oder mehrere untere Querträger (132) umfasst, die mit der Grundplatte (110) gekoppelt sind, um den Aufnahmeraum in zwei oder mehr Räume zu unterteilen; wobei jeder untere Querträger (132) des einen oder der mehreren Querträger eine erste konkav-konvexe Struktur (133) mit sich wiederholenden konkaven Teilen und vorstehenden Teilen aufweist, die sich in einer Kopplungsrichtung des oberen Querträgers (136) erstrecken,
einen zweiten Schritt des Platzierens einer Vielzahl von Zellstapeln (210) in einem Raum der zwei oder mehr Räume;
einen dritten Schritt des Koppelns eines oberen Querträgers (136) an einen unteren Querträger (132) des einen oder der mehreren unteren Querträger (132), nachdem die Vielzahl von Zellstapeln (210) in dem einen Raum der zwei oder mehr Räume platziert wurde;
wobei der obere Querträger (136) eine zweite konkav-konvexe Struktur aufweist, die der ersten konkav-konvexen Struktur (133) entspricht,
wobei der untere Querträger mindestens eine konkave Schweißnut (134) an einer Grenze mit der Grundplatte (110) aufweist,
und
Wiederholen des zweiten Schritts und des dritten Schritts für alle der verbleibenden zwei oder mehr Räume.

12. Herstellungsverfahren für einen Batteriepack (200) nach Anspruch 11, wobei der zweite Schritt eine Ladevorrichtung (300) mit einem Greifer (310) zum gemeinsamen Greifen der Vielzahl von Zellstapeln (210) verwendet, und der Greifer (310) so konfiguriert ist, dass er in einen konkaven Teil der ersten konkav-konvexen Struktur (133) eintritt und die gegriffene Vielzahl von Zellstapeln (210) auf der Grundplatte (110) platziert.

13. Herstellungsverfahren für einen Batteriepack (200) nach Anspruch 12, wobei im zweiten Schritt, nachdem die Vielzahl von Zellstapeln (210) auf der Grundplatte (110) platziert wurde, sich der Greifer (310) bei Freigabe des Greifers (310) über einen oberen Teil des unteren Querträgers (132) bewegt.

## Revendications

1. Boîtier de batterie (100) pour batteries, le boîtier de batterie (100) comprenant :
une plaque de base (110) ;
une plaque latérale (120) couplée le long d'un périmètre de la plaque de base (110) pour y définir un espace de logement ;
une traverse inférieure (132) couplée à la plaque de base (110) pour diviser transversalement l'espace de logement ; et
une traverse supérieure (136) couplée à la traverse inférieure (132),
dans lequel la traverse inférieure (132) inclut une première structure concavo-convexe (133) avec des parties concaves et des parties saillantes répétées s'étendant dans une direction de couplage de la traverse supérieure (136), et
dans lequel la traverse supérieure (136) inclut une deuxième structure concavo-convexe correspondant à la première structure concavo-convexe (133),
dans lequel la traverse inférieure inclut au moins une rainure de soudage concave (134) à une limite avec la plaque de base (110).

2. Le boîtier de batterie (100) selon la revendication 1, dans lequel la traverse supérieure (136) est couplée à une surface supérieure de la traverse inférieure (132) pour former une traverse unique.

3. Le boîtier de batterie (100) selon la revendication 1, comprenant en outre une poutre centrale (140) couplée à la plaque de base (110) de manière à diviser longitudinalement l'espace de logement.

4. Le boîtier de batterie (100) selon la revendication 1, dans lequel la traverse inférieure (132) est couplée à la plaque de base (110) par soudage, et
dans lequel la traverse supérieure (136) est couplée à la traverse inférieure (132) par un boulon (138).

5. Le boîtier de batterie (100) selon la revendication 4, dans lequel la traverse supérieure (136) est faite d'un matériau plus léger qu'un matériau de la traverse inférieure (132).

6. Le boîtier de batterie (100) selon l'une quelconque des revendications précédentes, dans lequel l'au moins une rainure de soudage concave (134) inclut des rainures de soudage concaves sur des côtés opposés de la traverse inférieure (132).

7. Le boîtier de batterie (100) selon la revendication 6, dans lequel chacune des rainures de soudage concaves est répartie de sorte qu'au moins une partie de celle-ci ne chevauche pas une rainure de soudage concave correspondante lui faisant face.

8. Le boîtier de batterie (100) selon l'une quelconque des revendications précédentes, dans lequel la traverse inférieure (132) est soudée à la plaque de base (110) par l'intermédiaire d'un cordon de soudure (135) dans la rainure de soudage, et
dans lequel le cordon de soudure (135) dans la rainure de soudage ne fait pas saillie à l'extérieur de la traverse inférieure (132).

9. Bloc-batterie (200) comprenant :
un boîtier de batterie (100) selon l'une quelconque des revendications 1 à 8 ; et
une pluralité d'empilements de cellules (210) situés dans l'espace de logement divisé transversalement du boîtier de batterie (100).

10. Le bloc-batterie (200) selon la revendication 9, dans lequel une feuille isolante ou un tampon de compression (220) est interposé entre une surface de contact d'un empilement de cellules (210) de la pluralité d'empilements de cellules et la traverse inférieure (132) et la traverse supérieure (136) adjacentes à la surface de contact de l'un empilement de cellules (210).

11. Procédé de fabrication d'un bloc-batterie (200) pour batteries, le procédé comprenant :
une première étape de préparation d'un boîtier de batterie (100) comprenant une plaque de base (110), une plaque latérale (120) couplée le long d'un périmètre de la plaque de base (110) pour y former un espace de logement, et une ou plusieurs traverses inférieures (132) couplées à la plaque de base (110) pour diviser l'espace de logement en deux espaces ou plus ; dans lequel chaque traverse inférieure (132) de la ou des traverses inférieures a une première structure concavo-convexe (133) avec des parties concaves et des parties saillantes répétées s'étendant dans une direction de couplage de la traverse supérieure (136),
une deuxième étape de placement d'une pluralité d'empilements de cellules (210) dans un espace des deux espaces ou plus ;
une troisième étape de couplage d'une traverse supérieure (136) à une traverse inférieure (132) de la ou des traverses inférieures (132) après que la pluralité d'empilements de cellules (210) a été placée dans l'un espace des deux espaces ou plus ;
dans lequel la traverse supérieure (136) inclut une deuxième structure concavo-convexe correspondant à la première structure concavo-convexe (133),
dans lequel la traverse inférieure inclut au moins une rainure de soudage concave (134) à une limite avec la plaque de base (110),
et
la répétition de la deuxième étape et de la troisième étape pour tous les deux espaces ou plus restants.

12. Le procédé de fabrication d'un bloc-batterie (200) selon la revendication 11, dans lequel la deuxième étape utilise un gabarit de chargement (300) ayant une pince (310) pour saisir collectivement la pluralité d'empilements de cellules (210), et la pince (310) est configurée pour pénétrer dans une partie concave de la première structure concavo-convexe (133) et placer la pluralité d'empilements de cellules (210) saisie sur la plaque de base (110).

13. Le procédé de fabrication d'un bloc-batterie (200) selon la revendication 12, dans lequel, dans la deuxième étape, après que la pluralité d'empilements de cellules (210) est placée sur la plaque de base (110), la pince (310) se déplace à travers une partie supérieure de la traverse inférieure (132) lors de la libération de la pince (310).
